# FASCICULE DE BREVET EUROPEEN

(11) **EP 3 510 291 B1**
(45) Date de publication et mention de la délivrance du brevet: **20.10.2021**
(21) Numéro de dépôt: 17769125.0
(22) Date de dépôt: 12.09.2017
(51) Int. Cl.: F16B 45/02

(54) **CONNECTEUR A DOIGT DE FERMETURE ET MOYENS DE RAPPEL ELASTIQUES EN APPUI GLISSANT**
VERBINDER MIT SCHLIESSFINGER UND ROBUSTEM, GLEITEND RUHENDEM RÜCKSTELLMITTELN
CONNECTOR WITH CLOSING FINGER AND RESILIENT RETURN MEANS RESTING SLIDINGLY TOGETHER

(30) Priorité: 12.09.2016 FR 1658484
(43) Date de publication de la demande: 17.07.2019
(73) Titulaire: Etablissements Simond, 74400 Chamonix Mont Blanc (FR)
(72) Inventeur: LAMOURELLE, Margaux, 74400 Chamonix Mont Blanc (FR); LEFEBVRE, Patrick, 74400 Chamonix Mont Blanc (FR)
(74) Mandataire: Cabinet Poncet
(86) Numéro de dépôt international: PCT/IB2017/055482
(87) Numéro de publication internationale: WO 2018/047137

(56) Documents cités:
- EP-A2- 0 466 613
- DE-A1- 3 700 781
- FR-A1- 2 915 777
- US-A- 4 095 316

## Description

### DOMAINE TECHNIQUE DE L'INVENTION

La présente invention concerne les connecteurs généralement utilisés pour la pratique de l'escalade, de l'alpinisme, de la spéléologie ou d'autres activités similaires.

Les connecteurs couramment utilisés à ce jour pour ces activités comprennent un corps de connecteur ayant au moins une portion de corps en forme d'anneau ouvert entre une première extrémité de corps et une seconde extrémité de corps, avec un doigt de fermeture articulé en rotation selon sa première extrémité autour d'un axe situé dans le corps au voisinage de la première extrémité de corps, entre une position de fermeture et une position d'ouverture. Un dispositif de rappel élastique sollicite le doigt de fermeture vers sa position de fermeture dans laquelle le doigt de fermeture rejoint les première et seconde extrémités de corps. L'utilisateur peut ouvrir l'anneau en repoussant le doigt en rotation autour de son axe à l'encontre de la force de rappel élastique.

Parmi les connecteurs utilisés à ce jour, les plus fréquents sont les mousquetons, dont l'anneau forme la totalité ou la quasi-totalité du corps de connecteur. Ces mousquetons ont une forme générale d'anneau fermé allongé, ayant un corps en forme de C dont les deux extrémités sont orientées l'une vers l'autre et sont séparées par un espace d'ouverture. Le doigt de fermeture comprend une première extrémité articulée sur une première extrémité du corps selon un axe transversal pour pivoter dans un plan de pivotement entre une position ouverte pivotée vers l'intérieur du corps et une position fermée dans laquelle la seconde extrémité du doigt s'engage sur la seconde extrémité du corps pour fermer l'espace d'ouverture. Les secondes extrémités respectives du corps et du doigt ont des formes complémentaires, par exemple une forme d'extrémité mâle sur le corps et une forme d'extrémité femelle sur le doigt, conformées pour s'engager l'une dans l'autre en fin de mouvement de fermeture dans le plan de pivotement. Les formes complémentaires sont adaptées notamment pour limiter la progression du doigt vers l'extérieur au-delà de sa position de fermeture, assurant ainsi une possibilité de tenue du mousqueton lors d'un effort de traction transversal.

Jusqu'à présent, dans la grande majorité des connecteurs de type mousqueton proposés dans le commerce, le dispositif de rappel élastique comprend un alésage axial qui est réalisé dans le doigt de fermeture et qui reçoit un ressort de compression engagé entre une butée fixe du doigt et une lamelle axiale légèrement oblique dont l'autre extrémité est engagée dans une encoche excentrée de la première extrémité du corps. Le ressort de compression et la lamelle axiale ont pour effet de rappeler le doigt en position fermée, en agissant à la façon d'un couplage bielle-manivelle.

À l'utilisation, un tel dispositif de rappel élastique donne satisfaction dans la plupart des cas.

Cependant, un inconvénient réside dans la présence de la lamelle axiale, qui est une pièce de faible volume et dont l'extrémité a une très faible section, qu'il faut insérer en force et avec précision, lors du montage, entre le ressort de compression à l'état comprimé et l'encoche excentrée du corps qui a également une très faible section. Il en résulte une difficulté de montage non négligeable, dont la réduction présenterait un intérêt.

Un autre inconvénient réside dans le risque de délogement de l'extrémité de lamelle hors de l'encoche excentrée lors d'un choc, provoquant le défaut de fonctionnement du dispositif de rappel élastique.

Un autre inconvénient est le risque de pénétration de corps étrangers (sable, boue, glace) dans l'encoche excentrée, pouvant favoriser le délogement de l'extrémité de lamelle hors de l'encoche excentrée, provoquant également le défaut de fonctionnement du dispositif de rappel élastique.

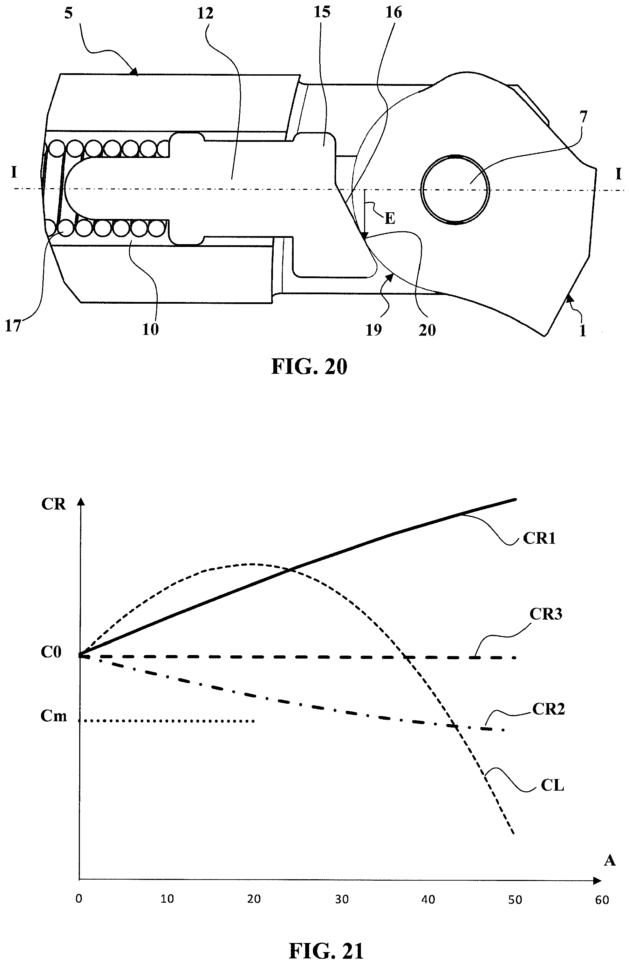

Un autre inconvénient résulte de la nécessité de garantir une bonne fiabilité de fermeture grâce à un couple de maintien en position de fermeture ayant une valeur suffisante, conformément aux normes en vigueur. Le dispositif de rappel élastique à lamelle axiale provoque en effet une augmentation forte du couple de rappel élastique au début du mouvement de rotation du doigt vers la position d'ouverture. À titre d'illustration, on a représenté en figure 21 la courbe CL de variation du couple de rappel du doigt en fonction de l'angle d'ouverture du doigt dans un tel dispositif de rappel élastique à lamelle axiale. Un tel dispositif nécessite de l'utilisateur l'application d'une force de retenue non négligeable lorsqu'il souhaite maintenir le connecteur en position d'ouverture partielle lors de l'utilisation. Cette force de retenue non négligeable conduit à une fatigue lors de l'utilisation, et à une perte d'ergonomie. La réduction de cette force de retenue présenterait un intérêt, au moins pour certaines applications.

Le document FR 2 915 777 A1 décrit un connecteur dans lequel un ressort hélicoïdal repousse axialement un étrier de transfert coulissant dans un alésage du doigt et venant en appui ponctuel sur une extrémité d'un fil métallique incurvé en boucle d'articulation. Il s'agit également d'un dispositif de rappel agissant à la façon d'un couplage bielle-manivelle, présentant une loi de variation du couple en fonction de l'angle de pivotement du doigt telle qu'illustrée sur la figure 21, et nécessitant l'application d'une force de retenue non négligeable pour maintenir le connecteur en position d'ouverture partielle. En outre, le document ne décrit pas comment l'étrier de transfert peut venir en appui sur l'extrémité du fil en boucle pour produire un rappel en rotation du doigt. En réalité, il apparaît nécessaire d'ajouter une pièce supplémentaire dans la boucle de fil métallique, comme cela est décrit dans le document EP 2 145 117 B1 correspondant. Il en résulte une grande complexité pour réaliser le montage d'un tel dispositif.

Le document DE 37 00781 A1 décrit un connecteur dans lequel une bille sollicitée par un ressort hélicoïdal se déplace dans un logement cylindrique du doigt et vient en appui sur une came réalisée à l'extrémité du corps. Dans ce document, le doigt est maintenu verrouillé en position ouverte par la force du ressort, et il ne se trouve donc pas ramené en permanence vers sa position fermée dans toutes les orientations angulaires du doigt autour de son axe de rotation. En outre, la bille est en appui sur la came selon une zone ponctuelle. Une telle zone ponctuelle est particulièrement sensible aux irrégularités inévitables de la came, et il en résulte un mouvement de rappel peu fiable et peu régulier du doigt vers sa position de fermeture. En outre, lors du montage pour la fabrication du connecteur, il est nécessaire de manipuler la bille, le doigt, le corps, le ressort et l'axe du doigt, et l'on comprend que le maintien de la bille est particulièrement difficile et n'autorise pas aisément l'automatisation du montage.

Un autre connecteur est connu par US 4 095 316 A.

### EXPOSE DE L'INVENTION

Un problème proposé par la présente invention est de concevoir un nouveau dispositif de rappel élastique pour connecteur, dépourvu de lamelle devant être assemblée en force et avec précision, qui à la fois facilite le montage et garantisse un mouvement de rappel fiable et régulier du doigt vers sa position de fermeture.

Un autre problème proposé par la présente invention est de concevoir un nouveau dispositif de rappel élastique pour connecteur qui présente une loi appropriée de variation du couple de rappel en fonction de l'angle de rotation du doigt de fermeture, permettant par exemple de conserver un couple de rappel approprié du doigt de fermeture lorsqu'il est en position ouverte tout en garantissant le maintien d'un couple de rappel suffisant du doigt de fermeture lorsqu'il est en position fermée. De la sorte, on peut notamment garantir simultanément un bon maintien en position de fermeture et une bonne ergonomie en choisissant le couple de rappel élastique qu'il faut vaincre pour maintenir le mousqueton en position ouverte.

Pour atteindre ces buts ainsi que d'autres, l'invention propose un connecteur comprenant :
- un corps de connecteur ayant au moins une portion de corps en anneau ayant une ouverture entre une première extrémité de corps et une seconde extrémité de corps en opposition l'une de l'autre,
- un doigt de fermeture, articulé en rotation, entre une position de fermeture et une position d'ouverture, selon sa première extrémité de doigt autour d'un axe de rotation situé dans le corps de connecteur au voisinage de la première extrémité de corps,
- un dispositif de rappel élastique sollicitant en permanence le doigt de fermeture vers sa position de fermeture dans laquelle le doigt de fermeture relie les première et seconde extrémités de corps,
dans lequel le dispositif de rappel élastique comprend :
- un moyen élastique de compression axiale, logé dans un alésage de compression ménagé dans un tronçon longitudinal de l'une de la première extrémité de corps ou de la première extrémité de doigt,
- une came ménagée sur l'autre de la première extrémité de corps ou de la première extrémité de doigt,
- un élément coulissant à surface frontale, qui coulisse en translation selon ledit tronçon longitudinal de ladite même première extrémité de corps ou première extrémité de doigt,
- l'élément coulissant étant sollicité par le moyen élastique de compression axiale, qui le repousse, selon une direction de poussée, en appui glissant sur la came par sa surface frontale selon une ligne d'appui parallèle à l'axe de rotation du doigt de fermeture et qui est en permanence déportée vers la position d'ouverture du doigt de fermeture par rapport à la direction de poussée passant par l'axe de rotation du doigt de fermeture.

Une telle architecture de connecteur est plus simple à fabriquer et à assembler. En effet, l'élément coulissant est en appui selon une surface frontale qui présente nécessairement une plus grande section transversale que l'extrémité de la lamelle des dispositifs de l'art antérieur, et le caractère coulissant de l'élément coulissant facilite son maintien lors du montage.

Simultanément, par le fait que l'appui glissant s'effectue selon une ligne d'appui, les irrégularités inévitables de la surface de la came, résultant de son usinage, n'affectent pas sensiblement la régularité du glissement de la surface frontale sur la came, de sorte que la rotation du doigt autour de son axe de rotation est régulière, sans à-coups.

Simultanément, une telle architecture de connecteur permet, par le choix approprié de la forme de came et de la forme de surface frontale d'élément coulissant, de concevoir des gammes de connecteurs présentant différentes lois de variation du couple de rappel du doigt de fermeture en fonction de l'angle d'ouverture. Il est alors possible de concevoir un connecteur particulièrement adapté à une grande sécurité de fermeture, en choisissant une loi de variation de couple à forte pente positive. À l'inverse, il est possible de concevoir un connecteur particulièrement adapté à une bonne ergonomie, par exemple pour un mousqueton de progression, en choisissant une loi de variation de couple à faible pente positive, ou même à pente négative. Il est même possible de choisir une loi de variation non linéaire.

L'élément coulissant peut a priori être structuré de diverses façons alternatives.

Selon une première alternative, l'élément coulissant peut être un piston monté à coulissement dans l'alésage de compression.

Selon une seconde alternative, l'élément coulissant peut être une bague montée coulissante sur la surface extérieure du tronçon de ladite même première extrémité de corps ou première extrémité de doigt.

D'autres structures coulissantes pourront être envisagées, telles que par exemple un coulissement dans une glissière.

Selon un mode de réalisation particulièrement avantageux de l'invention, l'élément coulissant et le moyen élastique de compression axiale peuvent être conformés pour constituer par assemblage un sous-ensemble manipulable. De cette façon, lors du montage pour réaliser le connecteur, on peut manipuler en une seule fois le sous-ensemble constitué par l'élément coulissant et le moyen élastique de compression axiale, ce qui facilite considérablement la possibilité d'automatiser le montage.

En particulier, on peut prévoir que :
- l'élément coulissant comporte un ergot axial,
- le moyen élastique de compression axiale comprend un ressort hélicoïdal de compression,
- le ressort hélicoïdal de compression comprend un tronçon de seconde extrémité engagé en force autour de l'ergot axial. De cette façon, il est possible de manipuler le sous-ensemble en tenant l'élément coulissant, rigide et non déformable, ce qui est plus simple et fiable que la manutention d'un ressort hélicoïdal essentiellement déformable. Cela facilite encore la possibilité d'automatiser le montage.

On notera que la caractéristique particulière d'assemblage de l'élément coulissant et du moyen élastique de compression axiale peut être utilisée indépendamment des caractéristiques particulières de forme de la surface frontale, pour réaliser un connecteur présentant l'avantage de faciliter le montage et de permettre son automatisation. Dans ce cas, on peut alors prévoir un connecteur comprenant :
- un corps de connecteur ayant au moins une portion de corps en anneau ayant une ouverture entre une première extrémité de corps et une seconde extrémité de corps en opposition l'une de l'autre,
- un doigt de fermeture, articulé en rotation, entre une position de fermeture et une position d'ouverture, selon sa première extrémité de doigt autour d'un axe de rotation situé dans le corps de connecteur au voisinage de la première extrémité de corps,
- un dispositif de rappel élastique sollicitant, en permanence ou non, le doigt de fermeture vers sa position de fermeture dans laquelle le doigt de fermeture relie les première et seconde extrémités de corps,
dans lequel le dispositif de rappel élastique comprend :
- un moyen élastique de compression axiale, disposé dans ou sur un tronçon longitudinal de l'une de la première extrémité de corps ou de la première extrémité de doigt,
- une came ménagée sur l'autre de la première extrémité de corps ou de la première extrémité de doigt,
- un élément coulissant à surface frontale, de type piston ou bague, qui coulisse selon ledit tronçon longitudinal de ladite même première extrémité de corps ou première extrémité de doigt,
- l'élément coulissant étant sollicité par le moyen élastique de compression axiale, qui le repousse, selon une direction de poussée, en appui glissant sur la came par sa surface frontale selon une zone d'appui qui est déportée vers la position d'ouverture du doigt de fermeture par rapport à la direction de poussée passant par l'axe de rotation du doigt de fermeture.

Dans ce cas, la zone d'appui peut être linéique ou ponctuelle.

L'architecture générale du dispositif de rappel élastique selon l'invention peut a priori être organisée selon deux alternatives.

Selon une première alternative, la came est disposée sur la première extrémité de corps, tandis que l'alésage de compression est ménagé dans un tronçon de la première extrémité de doigt.

Selon une seconde alternative, la came est disposée sur la première extrémité de doigt, tandis que l'alésage de compression est ménagé dans un tronçon de la première extrémité de corps.

Selon un premier mode de réalisation avantageux, la surface frontale de l'élément coulissant venant en appui sur la came est une face plane perpendiculaire à l'axe de coulissement de l'élément coulissant. Dans ce cas, la variation de couple de rappel en fonction de l'angle d'ouverture du doigt de fermeture dépend uniquement de la forme de la came.

Selon un second mode de réalisation avantageux, la surface frontale de l'élément coulissant qui vient en appui sur la came est une face oblique orientée vers l'intérieur de l'anneau. Dans ce cas, la variation de couple de rappel en fonction de l'angle d'ouverture du doigt de fermeture dépend à la fois de la forme de la came et de l'inclinaison de la surface frontale de l'élément coulissant.

Selon un troisième mode de réalisation avantageux, la surface frontale de l'élément coulissant venant en appui sur la came est une face oblique orientée vers l'extérieur de l'anneau. Dans ce cas, la variation de couple de rappel en fonction de l'angle d'ouverture du doigt de fermeture dépend également à la fois de la forme de la came et de l'inclinaison de la surface frontale de l'élément coulissant.

Selon une possibilité, la came et la surface frontale de l'élément coulissant venant en appui sur la came sont conformées de façon à produire un couple de rappel du doigt de fermeture vers sa position de fermeture qui présente une loi de variation en croissance régulière en fonction de l'angle d'ouverture du doigt de fermeture.

Selon une autre possibilité, la came et la surface frontale de l'élément coulissant venant en appui sur la came sont conformées de façon à produire un couple de rappel du doigt de fermeture vers sa position de fermeture qui présente une loi de variation en décroissance en fonction de l'angle d'ouverture du doigt de fermeture.

Selon encore une autre possibilité, la came et la surface frontale de l'élément coulissant venant en appui sur la came sont conformées de façon à produire un couple de rappel du doigt de fermeture vers sa position de fermeture qui présente une loi de variation sensiblement constante pendant toute l'ouverture du doigt de fermeture.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles:
- la figure 1 est une vue de côté en coupe d'un mousqueton selon un premier mode de réalisation de la présente invention, en position fermée ;
- la figure 2 est une vue de côté en coupe du mousqueton de la figure 1, en position ouverte ;
- la figure 3 est une vue de côté en coupe d'un mousqueton selon un second mode de réalisation de la présente invention, en position fermée ;
- la figure 4 est une vue de côté en coupe du mousqueton de la figure 3, en position ouverte ;
- la figure 5 est une vue de côté en coupe d'un mousqueton selon un troisième mode de réalisation de la présente invention, en position fermée ;
- la figure 6 est une vue de côté en coupe du mousqueton de la figure 5, en position ouverte ;
- la figure 7 est une vue de côté en coupe d'un mousqueton selon un quatrième mode de réalisation de la présente invention, en position fermée ;
- la figure 8 est une vue de côté en coupe du mousqueton de la figure 7, en position ouverte ;
- la figure 9 est une vue de côté en coupe d'un mousqueton selon un cinquième mode de réalisation de la présente invention, en position fermée ;
- la figure 10 est une vue de côté en coupe du mousqueton de la figure 9, en position ouverte ;
- la figure 11 est une vue de côté en coupe d'un mousqueton selon un sixième mode de réalisation de la présente invention, en position fermée ;
- la figure 12 est une vue de côté en coupe du mousqueton de la figure 11, en position ouverte ;
- la figure 13 est une vue de côté en coupe d'un mousqueton selon un septième mode de réalisation de la présente invention, en position fermée ;
- la figure 14 est une vue de côté en coupe du mousqueton de la figure 13, en position ouverte ;
- la figure 15 est une vue en perspective éclatée du mousqueton des figures 13 et 14 ;
- la figure 16 est une vue de côté en coupe d'un mousqueton selon un huitième mode de réalisation de la présente invention, en position fermée ;
- la figure 17 est une vue de côté en coupe du mousqueton de la figure 16, en position ouverte ;
- les figures 18 à 20 illustrent, à plus grande échelle et en vue partielle de côté en coupe, trois exemples de couple came - surface frontale selon la présente invention ; et
- la figure 21 illustre les lois de variation du couple de rappel du doigt de fermeture en fonction de l'angle d'ouverture pour chacun des exemples de couple came - surface frontale selon les figures 18 à 20, et la loi de variation du couple de rappel du doigt de fermeture en fonction de l'angle d'ouverture pour un connecteur traditionnel dont le dispositif de rappel élastique comprend une lamelle axiale et une encoche excentrée.

### DESCRIPTION DES MODES DE REALISATION PREFERES

Dans tous les modes de réalisation illustrés sur les figures, le connecteur selon la présente invention comprend un corps de connecteur 1 ayant une forme en anneau allongé et ouvert, ayant une ouverture 2 latérale entre une première extrémité de corps 3 est une seconde extrémité de corps 4 qui sont en opposition l'une de l'autre.

Un doigt de fermeture 5 est articulé en rotation selon sa première extrémité de doigt 6 autour d'un axe de rotation 7 situé dans le corps de connecteur 1 au voisinage de la première extrémité de corps 3.

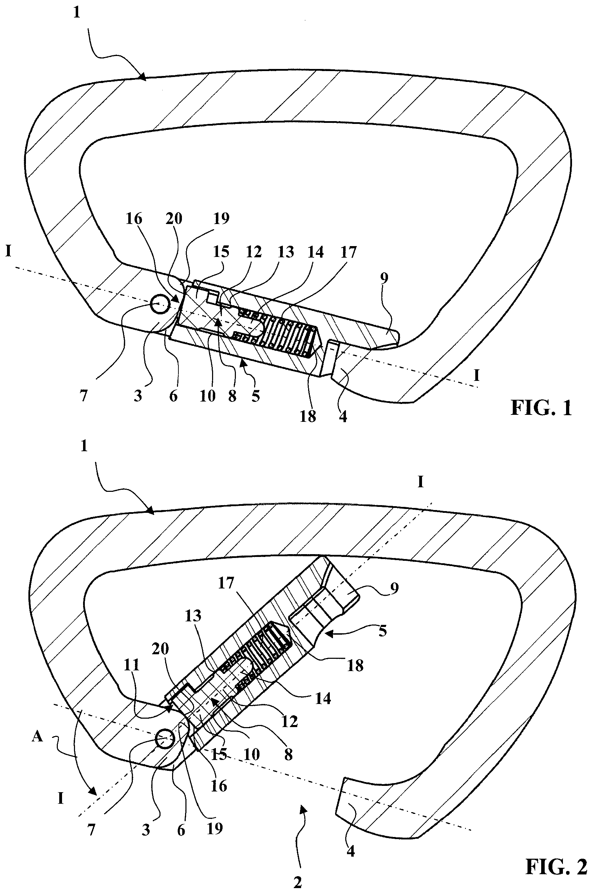

Le doigt de fermeture 5 peut pivoter autour de son axe de rotation 7 entre une position de fermeture, illustrée sur la figure 1, dans laquelle il relie les deux extrémités 3 et 4 du corps 1 pour obturer l'ouverture 2, et une position d'ouverture, illustrée sur la figure 2, dans laquelle il est pivoté vers l'intérieur de l'anneau formant le corps 1. En position de fermeture illustrée sur la figure 1, une seconde extrémité 9 du doigt de fermeture 5 bute contre la seconde extrémité 4 du corps 1, ce qui limite la progression du doigt de fermeture 5 vers l'extérieur au-delà de sa position de fermeture.

Un dispositif de rappel élastique 8 sollicite en permanence le doigt de fermeture 5 vers sa position de fermeture.

On considère maintenant la structure particulière du dispositif de rappel élastique 8.

Un alésage de compression 10 est réalisé dans le doigt de fermeture 5, avec une ouverture 11 au voisinage de la première extrémité de doigt 6, avec un fond 18, avec un tronçon de guidage à section transversale circulaire, et avec un tronçon de blocage en rotation à section transversale non circulaire.

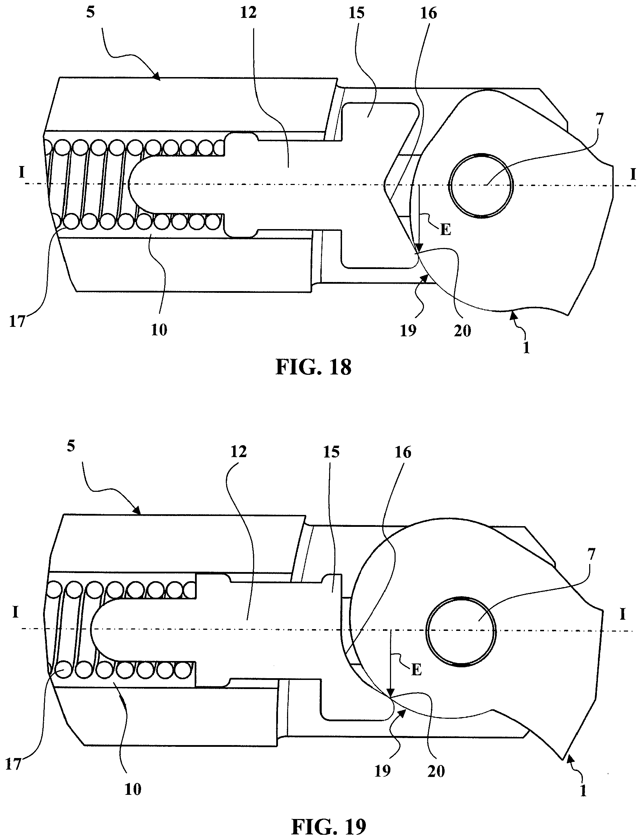

Un élément coulissant 12, en forme générale de piston, coulisse axialement dans l'alésage de compression 10. L'élément coulissant 12 comporte pour cela un tronçon à surface latérale 13 de révolution engagée à faible jeu radial dans le tronçon de guidage de l'alésage de compression 10. À une première extrémité, l'élément coulissant 12 comporte un ergot axial 14 de plus faible diamètre. À une seconde extrémité, l'élément coulissant 12 comporte une tête 15 à section transversale non circulaire dont la surface latérale est engagée à faible jeu dans le tronçon de blocage en rotation à section transversale correspondante non circulaire de l'alésage de compression 10. La tête 15 se termine par une surface frontale 16, réglée parallèlement à l'axe de rotation 7, et qui peut être plane, convexe ou concave, comme expliqué ci-après en relation avec les figures 18, 19 et 20.

Un moyen élastique de compression axiale 17, en l'espèce sous forme d'un ressort hélicoïdal de compression, est logé dans l'alésage de compression 10 entre le fond 18 de l'alésage et l'élément coulissant 12.

La première extrémité de corps 3 présente une surface frontale réglée parallèlement à l'axe de rotation 7, avec un profil arrondi tel qu'illustré sur les figures. De la sorte, la surface frontale constitue une came 19.

À l'état assemblé tel qu'illustré sur les figures 1 et 2, l'élément coulissant 12 est sollicité par le moyen élastique de compression axiale 17 qui prend appui selon une première extrémité dans le fond de l'alésage de compression 10, est engagé en force selon une seconde extrémité autour de l'ergot 14, et repousse l'élément coulissant 12 en direction de la première extrémité de corps 3, l'élément coulissant 12 étant ainsi en appui glissant sur la came 19 par sa surface frontale 16 selon une ligne d'appui 20 parallèle à l'axe de rotation 7 du doigt de fermeture 5.

Pour réaliser un couple de rappel du doigt de fermeture 5 vers sa position de fermeture, l'appui glissant entre la surface frontale 16 de l'élément coulissant 12 et la came 19 s'effectue en une ligne d'appui 20 qui est déportée vers la position d'ouverture du doigt de fermeture 5 par rapport à la direction de poussée I-I passant par l'axe de rotation 7 du doigt de fermeture 5. Dans ce mode de réalisation, en pratique, la ligne d'appui 20 est déportée vers l'intérieur de l'anneau formant le corps 1 par rapport à l'axe de rotation 7 du doigt de fermeture 5.

En observant les figures 1 et 2, on constate que, dans cet exemple, la ligne d'appui 20 se déplace à la fois sur la came 19 et sur la surface frontale 16 lors de la rotation du doigt de fermeture 5 autour de son axe de rotation 7 entre ses positions d'ouverture et de fermeture.

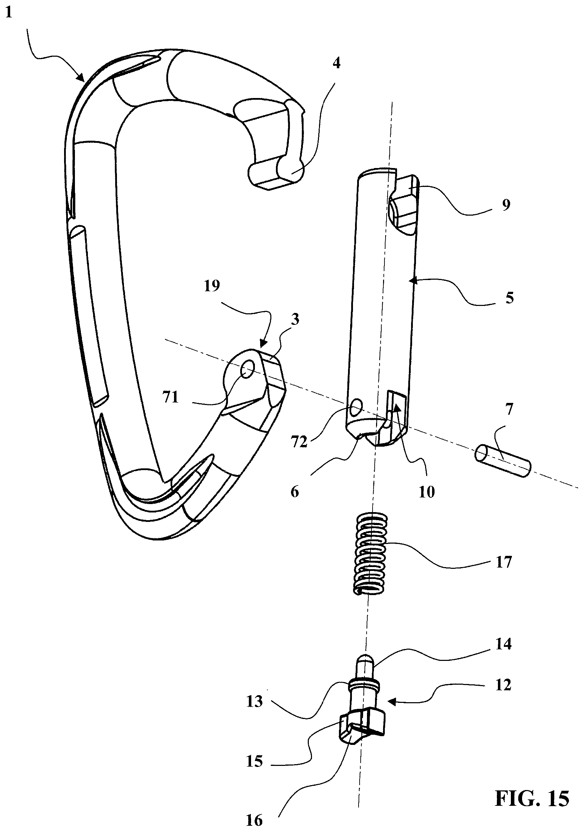

Pour mieux apprécier la structure générale des différents éléments composant le connecteur, on peut considérer la figure 15 en perspective éclatée, concernant un autre mode de réalisation, mais dans laquelle on retrouve les mêmes éléments principaux du connecteur. On retrouve ainsi la structure de corps 1 en anneau ouvert, avec une première extrémité de corps 3, une seconde extrémité de corps 4, un trou transversal 71 pour le passage d'un axe de rotation 7, une came 19 à la première extrémité de corps 3. On retrouve la structure de doigt de fermeture 5, avec une première extrémité de doigt 6, une seconde extrémité de doigt 9, deux trous transversaux 72 colinéaires pour le passage de l'axe de rotation 7, et un alésage de compression 10 ouvert à la première extrémité de doigt 6. On retrouve encore le moyen élastique de compression axiale 17 sous forme d'un ressort hélicoïdal de compression, adapté pour s'engager dans l'alésage de compression 10. On retrouve enfin l'élément coulissant 12, dans lequel on distingue l'ergot axial 14, la tête 15, le tronçon à surface latérale 13 de révolution pour coulisser à faible jeu dans le tronçon de guidage de l'alésage de compression 10, et la surface frontale 16. On notera que, dans le mode de réalisation de la figure 15, la surface frontale 16 présente une forme différente de celle de la surface frontale 16 du mode de réalisation des figures 1 et 2. Il s'agit en pratique de la seule différence entre les deux modes de réalisation.

En considérant à nouveau les figures 1 et 2, on voit que la surface frontale 16 de ce premier mode de réalisation est une face plane sensiblement perpendiculaire à l'axe de coulissement de l'élément coulissant 12 dans l'alésage de compression 10. Le doigt de fermeture 5 est généralement rectiligne.

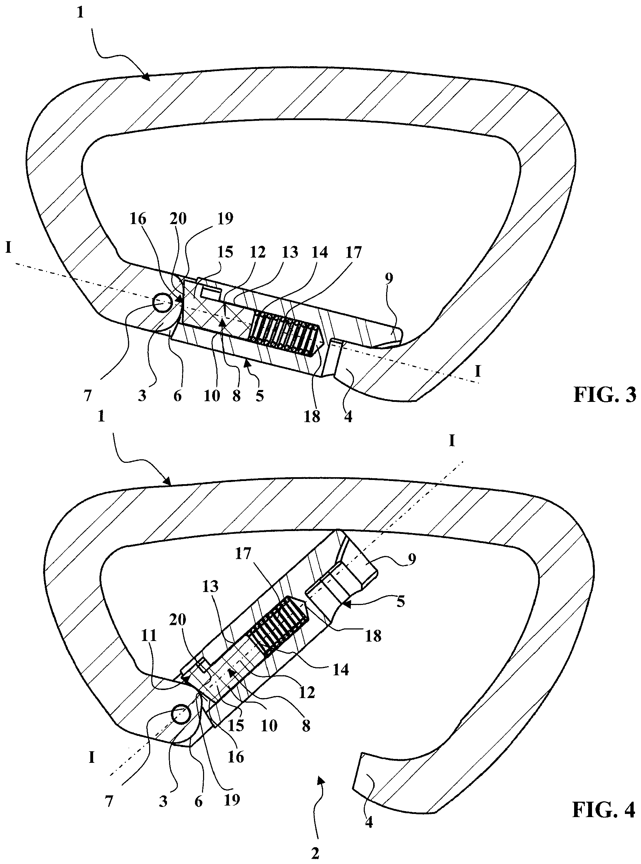

Tous les modes de réalisation illustrés sur les figures 3 à 15 reprennent sensiblement les mêmes éléments essentiels que le mode de réalisation des figures 1 et 2, et ces moyens essentiels ont été repérés par les mêmes références numériques sur chaque figure correspondante. Il n'est donc pas utile de reprendre de façon détaillée la description de chacun des modes de réalisation, et on pourra se contenter de décrire les différences, lesquelles portent essentiellement sur les formes de la came 19 et de la surface frontale 16.

Ainsi, dans le mode de réalisation des figures 3 et 4, la surface frontale 16 se distingue par sa forme plane et son orientation oblique orientée vers l'extérieur de l'anneau formant le corps 1. Le doigt de fermeture 5 est généralement rectiligne.

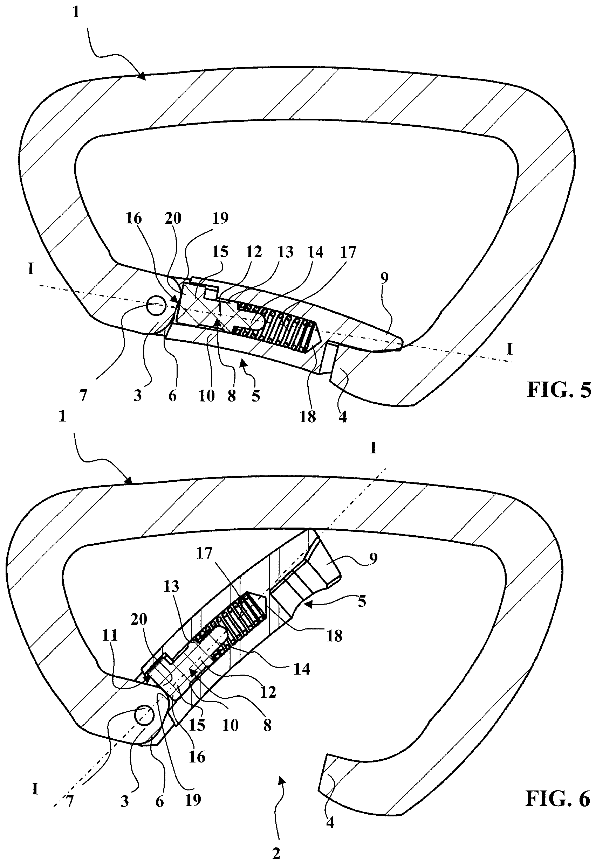

Dans le mode de réalisation des figures 5 et 6, la surface frontale 16 est à nouveau une surface plane sensiblement perpendiculaire à l'axe de coulissement de l'élément coulissant 12 dans l'alésage de compression 10. La différence essentielle réside dans le profil longitudinal incurvé du doigt de fermeture 5, l'alésage de compression 10 pouvant également être incurvé en suivant l'incurvation du doigt de fermeture 5, ce qui n'empêche pas le coulissement correct en translation de l'élément coulissant 12.

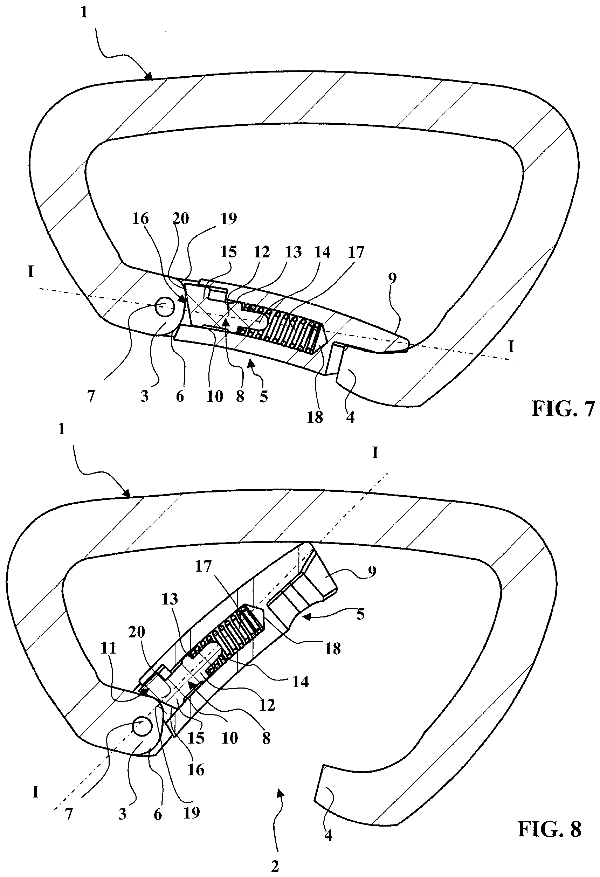

Dans le mode de réalisation des figures 7 et 8, on retrouve à nouveau un doigt de fermeture 5 à profil longitudinal incurvé comme dans le mode de réalisation précédent, tandis que la face frontale 16 présente à nouveau une forme plane avec une orientation oblique orientée vers l'extérieur de l'anneau formant le corps 1.

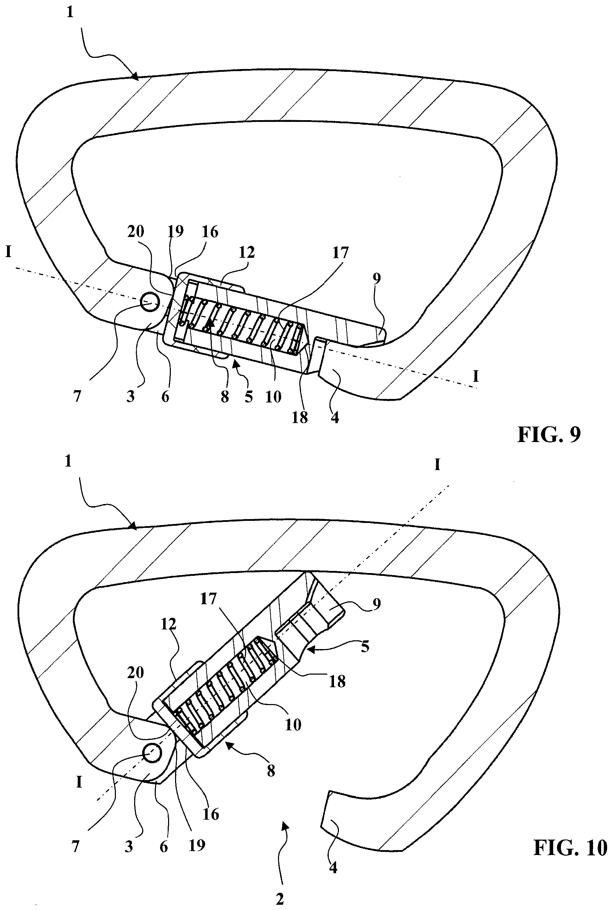

Dans le mode de réalisation des figures 9 et 10, une différence importante réside dans la structure de l'élément coulissant 12. Dans ce cas, au lieu d'un élément coulissant de type piston engagé à l'intérieur de l'alésage de compression 10, l'élément coulissant 12 est une bague montée coulissante sur la surface extérieure du tronçon d'extrémité de la première extrémité de doigt 6. Pour le reste, on retrouve une surface frontale 16 qui, dans ce mode de réalisation, est plane et sensiblement perpendiculaire à l'axe de coulissement de la bague 12 sur le doigt de fermeture 5.

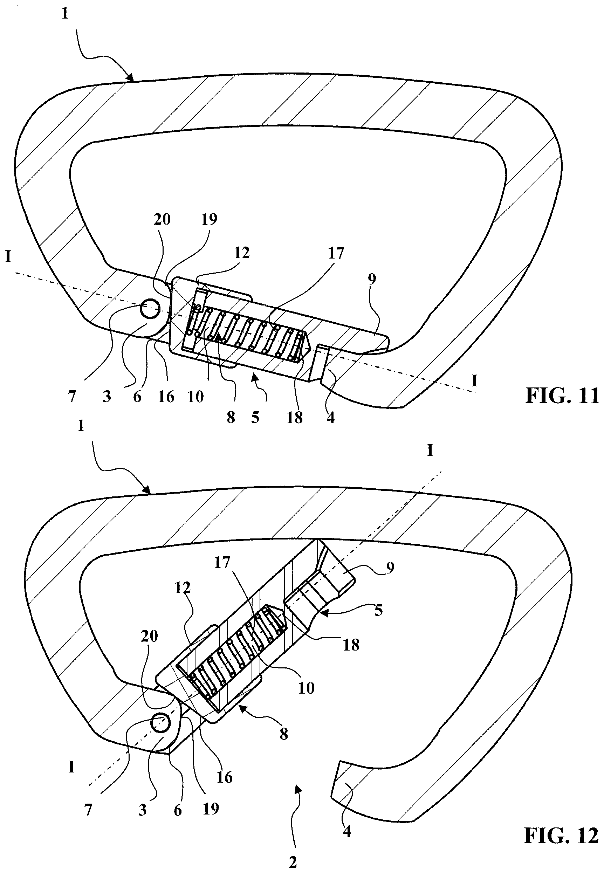

Dans le mode de réalisation des figures 11 et 12, on retrouve une structure d'élément coulissant 12 en forme de bague montée coulissante sur la surface extérieure du tronçon d'extrémité de la première extrémité de doigt 6. La différence réside dans la surface frontale 16 qui, dans ce mode de réalisation, est plane avec une orientation oblique orientée vers l'extérieur de l'anneau formant le corps 1.

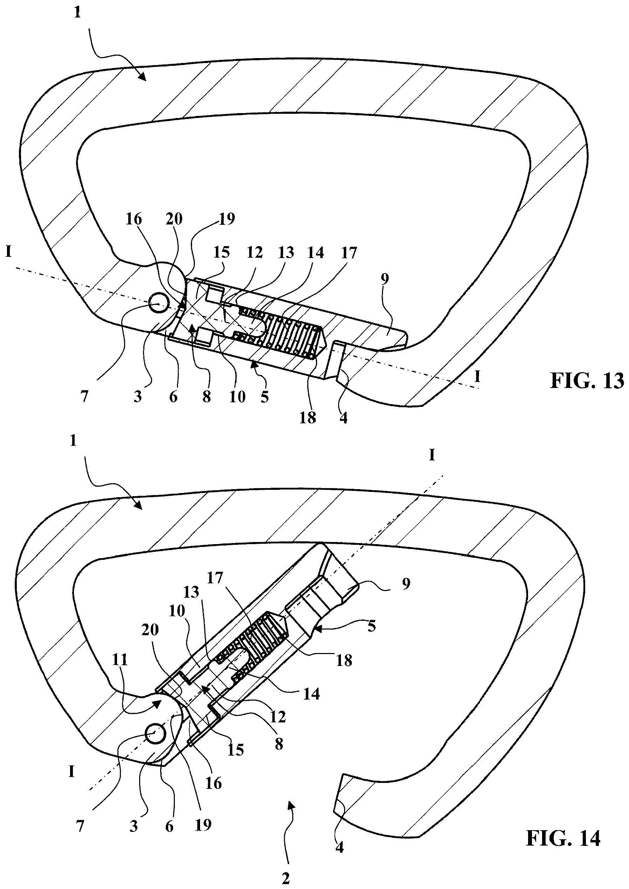

Dans le mode de réalisation des figures 13 à 15, on retrouve une structure d'élément coulissant 12 en forme de piston engagé à coulissement dans l'alésage de compression 10. La différence réside dans la forme de la surface frontale 16. Dans ce cas, la surface frontale 16 est un dièdre rentrant dont le sommet est parallèle à l'axe de rotation 7, le pan de dièdre qui vient en appui sur la came 19 formant une facette oblique orientée vers l'extérieur de l'anneau formant le corps 1.

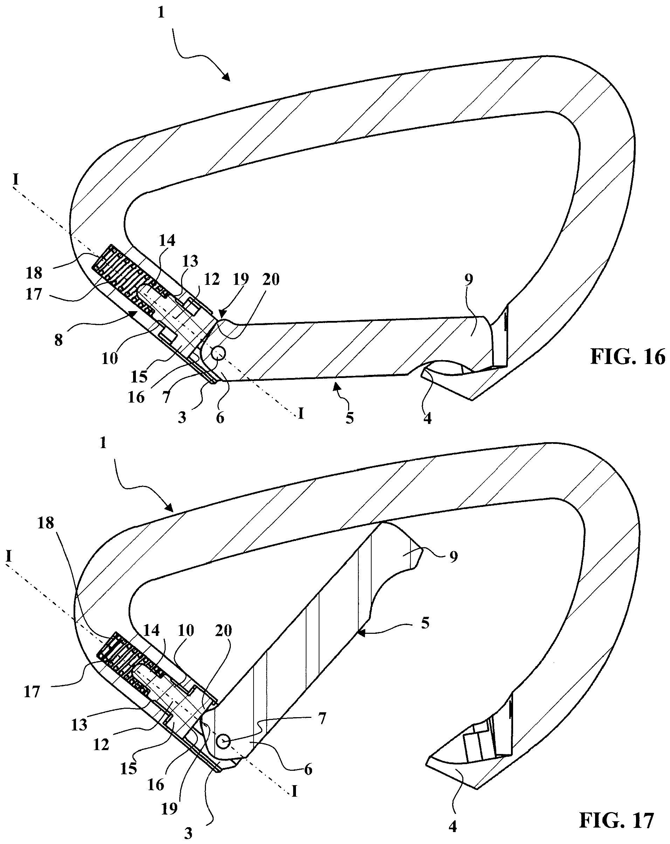

On considère maintenant le mode de réalisation des figures 16 et 17. La différence essentielle réside dans la position de la came 19, qui est alors réalisée sur la première extrémité de doigt 6, et la position de l'alésage de compression 10, qui est alors réalisé dans le tronçon de première extrémité de corps 3. Pour le reste, on remarque la surface frontale 16, qui est plane et généralement perpendiculaire à l'axe de coulissement de l'élément coulissant 12 dans l'alésage de compression 10.

Dans les modes de réalisation des figures 1 à 8, la tête 15 de l'élément coulissant 12 présente une forme dissymétrique, avec une excroissance latérale unique se développant vers la position d'ouverture du doigt de fermeture 5. Cette excroissance permet le déplacement de la ligne d'appui 20 vers l'intérieur de l'anneau formant le corps 1 pendant la rotation du doigt de fermeture 5 vers sa position ouverte. En alternative, dans tous ces modes de réalisation, on peut donner à la tête 15 une forme symétrique, présentant deux excroissances latérales opposées, comme c'est le cas dans les modes de réalisation des figures 13 à 17. Cela facilite à la fois la fabrication et le montage du connecteur.

On comprend que, dans tous les modes de réalisation, la force d'appui axial de la surface frontale 16 sur la came 19, orientée selon une direction de poussée I-I et appliquée selon une ligne d'appui 20 décentrée par rapport à l'axe de rotation 7, produit sur le doigt de fermeture 5 un couple de rotation qui tend à ramener le doigt de fermeture 5 vers sa position de fermeture dans laquelle sa seconde extrémité 9 vient en appui sur la seconde extrémité 4 du corps 1.

On comprend également que, en choisissant la forme de la came 19 et la forme ou l'orientation de la surface frontale 16, on peut donner assez librement au couple de rappel du doigt de fermeture 5 des lois de variation différentes pouvant être souhaitables en fonction des applications envisagées.

Ainsi, la figure 18 illustre un premier exemple de couple came 19 - surface frontale 16, dans lequel la surface frontale 16 de l'élément coulissant 12 venant en appui sur la came 19 est un dièdre concave à faces planes et présentant chacune une même inclinaison, pouvant avantageusement être d'environ 60°, par rapport à la direction de poussée I-I, et la came 19 comporte un secteur qui présente, par rapport à l'axe de rotation 7, un rayon qui augmente progressivement dans le sens de rotation du doigt de fermeture 5 vers sa position d'ouverture.

La figure 19 illustre un second exemple de couple came 19 - surface frontale 16, dans lequel la surface frontale 16 de l'élément coulissant 12 venant en appui sur la came 19 comporte un secteur cylindrique concave, et la came 19 comporte un secteur qui présente, par rapport à l'axe de rotation 7, un rayon qui décroît légèrement dans le sens de rotation du doigt de fermeture 5 vers sa position d'ouverture.

La figure 20 illustre un troisième exemple de couple came 19 - surface frontale 16, dans lequel la surface frontale 16 de l'élément coulissant 12 venant en appui sur la came 19 est un dièdre concave à faces planes et présentant chacune une même inclinaison, pouvant avantageusement être d'environ 60°, par rapport à la direction de poussée I-I, et la came 19 comporte un secteur qui présente une forme cylindrique à rayon constant par rapport à l'axe de rotation 7.

Sur chacune des trois figures, le doigt de fermeture 5 est illustré dans sa position de fermeture, et son mouvement d'ouverture se produit par une rotation autour de l'axe de rotation 7 dans le sens inverse des aiguilles d'une montre. On a illustré sur chacune des trois figures, dans la position de fermeture, le déport ou écart E de la ligne d'appui 20 par rapport à la direction de poussée I-I passant par l'axe de rotation 7. Par la présence de cet écart E, la ligne d'appui 20 est déportée vers la position d'ouverture du doigt de fermeture 5, c'est-à-dire vers le bas sur les figures.

Sur la figure 21, on a illustré quatre lois de variation du couple de rappel CR en fonction de l'angle d'ouverture A. Les quatre lois de variation ont été déterminées dans des conditions similaires de poussée, c'est-à-dire en utilisant des moyens de compression axiale 17 présentant des raideurs similaires et, en position fermée du doigt de fermeture 5, des précontraintes similaires. De la sorte, en position fermée du doigt de fermeture 5, c'est-à-dire pour un angle A nul, le couple de rappel CR des quatre lois de variation est égal à C0, la valeur étant choisie supérieure au couple minimal initial Cm déterminé par les normes en vigueur concernant les connecteurs.

La courbe CL illustre la loi de variation du couple de rappel CR en fonction de l'angle d'ouverture A dans le cas d'un dispositif de rappel élastique traditionnel à languette axiale dont l'extrémité est engagée dans une encoche excentrée. On constate que le couple de rappel CR augmente fortement en début de rotation du doigt de fermeture, passe par un maximum, puis décroît fortement après un angle d'ouverture d'environ 20°.

La courbe CR1 illustre la loi de variation du couple de rappel CR en fonction de l'angle d'ouverture A dans le cas d'un dispositif de rappel élastique selon la figure 18. On constate que le couple de rappel CR augmente linéairement, en croissance régulière en fonction de l'angle d'ouverture A du doigt de fermeture 5, pendant toute la rotation du doigt de fermeture 5 vers sa position d'ouverture.

La courbe CR2 illustre la loi de variation du couple de rappel CR en fonction de l'angle d'ouverture A dans le cas d'un dispositif de rappel élastique selon la figure 19. On constate que le couple de rappel CR est en décroissance presque linéaire en fonction de l'angle d'ouverture A du doigt de fermeture 5, pendant toute la rotation du doigt de fermeture 5, pour atteindre une valeur proche du couple minimal initial Cm en fin d'ouverture.

La courbe CR3 illustre la loi de variation du couple de rappel CR en fonction de l'angle d'ouverture A dans le cas d'un dispositif de rappel élastique selon la figure 20. On constate que le couple de rappel CR présente une loi de variation sensiblement constante, et reste égal au couple C0 pendant toute la rotation du doigt de fermeture 5.

Dans tous les modes de réalisation illustrés sur les figures, le connecteur selon l'invention est sous forme d'un mousqueton tel que ceux généralement utilisés pour la pratique de l'escalade, de l'alpinisme, de la spéléologie ou d'autres activités similaires, avec un doigt de fermeture dont l'ouverture s'effectue vers l'intérieur de l'anneau formant le corps.

On comprendra toutefois que l'invention n'est pas limitée à une telle structure de connecteur, et qu'elle peut s'appliquer à des connecteurs dont le corps présente une forme plus complexe, pour produire des fonctions supplémentaires. On peut notamment appliquer l'invention à des descendeurs, à des dispositifs d'assurage.

L'invention s'applique également à des connecteurs ayant un doigt de fermeture dont l'ouverture s'effectue vers l'extérieur de l'anneau formant le corps. Dans ce cas, l'appui glissant entre la surface frontale de l'élément coulissant et la came s'effectue encore en une zone d'appui qui est déportée vers la position d'ouverture du doigt de fermeture par rapport à la direction de poussée passant par l'axe de rotation du doigt de fermeture. En pratique, la zone d'appui est alors déportée vers l'extérieur de l'anneau formant le corps par rapport à la direction de poussée passant par l'axe de rotation du doigt de fermeture.

La présente invention n'est pas limitée aux modes de réalisation qui ont été explicitement décrits, mais elle en inclut les diverses variantes et généralisations contenues dans le domaine des revendications ci-après.

## Revendications

1. Connecteur comprenant :
- un corps de connecteur (1) ayant au moins une portion de corps en anneau ayant une ouverture (2) entre une première extrémité de corps (3) et une seconde extrémité de corps (4) en opposition l'une de l'autre,
- un doigt de fermeture (5), articulé en rotation, entre une position de fermeture et une position d'ouverture, selon sa première extrémité de doigt (6) autour d'un axe de rotation (7) situé dans le corps de connecteur (1) au voisinage de la première extrémité de corps (3),
- un dispositif de rappel élastique (8) sollicitant en permanence le doigt de fermeture (5) vers sa position de fermeture dans laquelle le doigt de fermeture (5) relie les première (3) et seconde (4) extrémités de corps,
où le dispositif de rappel élastique (8) comprend :
- un moyen élastique de compression axiale (17), logé dans un alésage de compression (10) ménagé dans un tronçon longitudinal de l'une de la première extrémité de corps (3) ou de la première extrémité de doigt (6),
- une came (19) ménagée sur l'autre de la première extrémité de corps (3) ou de la première extrémité de doigt (6),
- un élément coulissant (12) à surface frontale (16), qui coulisse en translation selon ledit tronçon longitudinal de ladite même première extrémité de corps (3) ou première extrémité de doigt (6),
- l'élément coulissant (12) étant sollicité par le moyen élastique de compression axiale (17), qui le repousse, selon une direction de poussée (I-I), en appui glissant sur la came (19) par sa surface frontale (16) selon une ligne d'appui (20) parallèle à l'axe de rotation (7) du doigt de fermeture (5) et qui est en permanence déportée vers la position d'ouverture du doigt de fermeture (5) par rapport à la direction de poussée (I-I) passant par l'axe de rotation (7) du doigt de fermeture (5).

2. Connecteur selon la revendication 1, **caractérisé en ce que** l'élément coulissant (12) est un piston monté à coulissement dans l'alésage de compression (10).

3. Connecteur selon la revendication 1, **caractérisé en ce que** l'élément coulissant (12) est une bague montée coulissante sur la surface extérieure du tronçon de ladite même première extrémité de corps (3) ou première extrémité de doigt (6).

4. Connecteur selon l'une des revendications 1 ou 2, **caractérisé en ce que** l'élément coulissant (12) et le moyen élastique de compression axiale (17) sont conformés pour constituer par assemblage un sous-ensemble manipulable.

5. Connecteur selon la revendication 4, caractérisé en ce :
- l'élément coulissant (12) comporte un ergot axial (14),
- le moyen élastique de compression axiale (17) comprend un ressort hélicoïdal de compression,
- le ressort hélicoïdal de compression comprend un tronçon de seconde extrémité engagé en force autour de l'ergot axial (14).

6. Connecteur selon l'une quelconque des revendications 1 à 5, **caractérisé en ce que** la came (19) est disposée sur la première extrémité de corps (3), tandis que l'alésage de compression (10) est ménagé dans un tronçon de la première extrémité de doigt (6).

7. Connecteur selon l'une quelconque des revendications 1 à 5, **caractérisé en ce que** la came (19) est disposée sur la première extrémité de doigt (6), tandis que l'alésage de compression (10) est ménagé dans un tronçon de la première extrémité de corps (3).

8. Connecteur selon l'une quelconque des revendications 1 à 7, **caractérisé en ce que** la surface frontale (16) de l'élément coulissant (12) venant en appui sur la came (19) est une face plane perpendiculaire à l'axe de coulissement de l'élément coulissant (12).

9. Connecteur selon l'une quelconque des revendications 1 à 7, **caractérisé en ce que** la surface frontale (16) de l'élément coulissant (12) venant en appui sur la came (19) est une face oblique orientée vers l'intérieur de l'anneau.

10. Connecteur selon l'une quelconque des revendications 1 à 7, **caractérisé en ce que** la surface frontale (16) de l'élément coulissant (12) venant en appui sur la came (19) est une face oblique orientée vers l'extérieur de l'anneau.

11. Connecteur selon l'une quelconque des revendications 1 à 7, **caractérisé en ce que** :
- la surface frontale (16) de l'élément coulissant (12) venant en appui sur la came (19) est un dièdre concave à faces planes et présentant chacune une même inclinaison, avantageusement d'environ 60°, par rapport à la direction de poussée (I-I),
- la came (19) comporte un secteur qui présente, par rapport à l'axe de rotation (7), un rayon qui augmente progressivement dans le sens de rotation du doigt de fermeture (5) vers sa position d'ouverture,
- de façon à produire un couple de rappel (CR) du doigt de fermeture (5) vers sa position de fermeture qui présente une loi de variation (CR1) en croissance régulière en fonction de l'angle d'ouverture (A) du doigt de fermeture (5), pendant toute la rotation du doigt de fermeture (5).

12. Connecteur selon l'une quelconque des revendications 1 à 7, **caractérisé en ce que** :
- la surface frontale (16) de l'élément coulissant (12) venant en appui sur la came (19) comporte un secteur cylindrique concave,
- la came (19) comporte un secteur qui présente, par rapport à l'axe de rotation (7), un rayon qui décroît légèrement dans le sens de rotation du doigt de fermeture (5) vers sa position d'ouverture,
- de façon à produire un couple de rappel (CR) du doigt de fermeture (5) vers sa position de fermeture qui présente une loi de variation (CR2) en décroissance en fonction de l'angle d'ouverture (A) du doigt de fermeture (5), pendant toute la rotation du doigt de fermeture (5).

13. Connecteur selon l'une quelconque des revendications 1 à 7, **caractérisé en ce que** :
- la surface frontale (16) de l'élément coulissant (12) venant en appui sur la came (19) est un dièdre concave à faces planes et présentant chacune une même inclinaison, avantageusement d'environ 60°, par rapport à la direction de poussée (I-I),
- la came (19) comporte un secteur qui présente une forme cylindrique à rayon constant par rapport à l'axe de rotation (7),
- de façon à produire un couple de rappel (CR) du doigt de fermeture (5) vers sa position de fermeture qui présente une loi de variation (CR3) sensiblement constante pendant toute l'ouverture du doigt de fermeture (5).

## Patentansprüche

1. Verbinder umfassend:
- einen Verbinderkörper (1), aufweisend mindestens ein Ringkörperteil, aufweisend eine Öffnung (2) zwischen einem ersten Ende des Körpers (3) und einem zweiten Ende des Körpers (4), die einander gegenüberliegen,
- einen Schließfinger (5), angelenkt in Rotation, zwischen einer geschlossenen Position und einer offenen Position, angeordnet gemäß seines ersten Endes des Fingers (6) um eine Rotationsachse (7) in dem Verbinderkörper (1) neben dem ersten Ende des Körpers (3),
- eine elastische Rückstellvorrichtung (8), die den Schließfinger (5) kontinuierlich in Richtung seiner geschlossenen Position vorspannt, in der der Schließfinger (5) das erste (3) und das zweite (4) Ende des Körpers verbindet,
wo die elastische Rückstellvorrichtung (8) umfasst:
- ein elastisches axiales Kompressionsmittel (17), das in einer Kompressionsbohrung (10) untergebracht ist, die in einem Längsschnitt des ersten Endes des Körpers (3) oder des ersten Endes des Fingers (6) ausgebildet ist,
- einen Nocken (19), der am anderen des ersten Endes des Körpers (3) oder des ersten Endes des Fingers (6) ausgebildet ist,
- ein Schiebeelement (12) mit einer frontalen Oberfläche (16), das sich entlang besagten Längsabschnitts desselben besagten ersten Endes des Körpers (3) oder ersten Endes des Fingers (6) translatorisch verschiebt,
- das Schiebeelement (12) durch die elastischen axialen Kompressionsmittel (17) vorgespannt ist, die es zurück, in einer Schubrichtung (I-I) schieben, gleitend gelagert an dem Nocken (19) mit seiner frontalen Oberfläche (16) entlang einer Lagerführung (20), die parallel zur Rotationsachse (7) des Schließfingers (5) verläuft, und das permanent geschoben ist in Richtung der offenen Position des Schließfingers (5) relativ zur Schubrichtung (I-I) durch die Rotationsachse (7) des Schließfingers (5).

2. Verbinder nach Anspruch 1, **dadurch gekennzeichnet, dass** das Schiebeelement (12) ein in der Kompressionsbohrung (10) verschiebbar gelagerter Kolben ist.

3. Verbinder nach Anspruch 1, **dadurch gekennzeichnet, dass** das Schiebeelement (12) eine Buchse ist, die verschiebbar an der Außenoberfläche des Abschnitts desselben besagten ersten Endes des Körpers (3) oder ersten Endes des Fingers (6) montiert ist.

4. Verbinder nach einem der Ansprüche 1 oder 2, **dadurch gekennzeichnet, dass** das Verschiebeelement (12) und die elastischen axialen Kompressionsmittel (17) geformt sind, um durch Zusammenbau eine handhabbare Untereinheit zu bilden.

5. Verbinder nach Anspruch 4, **dadurch gekennzeichnet, dass**:
- das Verschiebeelement (12) einen axialen Sporn (14) aufweist,
- das elastische axiale Kompressionsmittel (17) eine Schraubenkompressionsfeder umfasst,
- die Schraubenkompressionsfeder einen zweiten Endabschnitt umfasst, der den axialen Sporn (14) zwangsweise umgreift.

6. Verbinder nach einem der Ansprüche 1 bis 5, **dadurch gekennzeichnet, dass** der Nocken (19) an dem ersten Ende des Körpers (3) angeordnet ist, während die Kompressionsbohrung (10) in einem Abschnitt des ersten Ende des Fingers (6) ausgebildet ist.

7. Verbinder nach einem der Ansprüche 1 bis 5, **dadurch gekennzeichnet, dass** der Nocken (19) an dem ersten Ende des Fingers (6) angeordnet ist, während die Kompressionsbohrung (10) in einem Abschnitt des ersten Endes des Körpers (3) ausgebildet ist.

8. Verbinder nach einem der Ansprüche 1 bis 7, **dadurch gekennzeichnet, dass** die frontale Oberfläche (16) des Verschiebeelements (12), die auf dem Nocken (19) zur Anlage kommt, eine ebene Fläche senkrecht orientiert zur Verschiebeachse des Verschiebeelements (12) ist.

9. Verbinder nach einem der Ansprüche 1 bis 7, **dadurch gekennzeichnet, dass** die frontale Oberfläche (16) des Verschiebeelements (12) auf der Lagernocken (19) eine Fläche, schräg orientiert zur Innenseite des Rings ist.

10. Verbinder nach einem der Ansprüche 1 bis 7, **dadurch gekennzeichnet, dass** die frontale Oberfläche (16) des Verschiebeelements (12) auf der Lagernocken (19) eine Oberfläche, schräg orientiert zur Außenseite des Rings ist.

11. Verbinder nach einem der Ansprüche 1 bis 7, **dadurch gekennzeichnet, dass**:
- die frontale Oberfläche (16) des Verschiebeelements (12), die an dem Nocken (19) zur Anlage kommt, ein konkaves Dieder mit ebenen Flächen ist und die jeweils die gleiche Neigung präsentieren, vorteilhafterweise von etwa 60°, relativ zur Schubrichtung (I-I),
- der Nocken (19) einen Sektor aufweist, der, relativ zur Rotationsachse (7), einen Radius präsentiert, der in Rotationsrichtung des Schließfingers (5) in Richtung seiner offenen Position allmählich zunimmt,
- derart, um ein Rückstellmoment (CR) des Schließfingers (5) in Richtung seiner geschlossenen Position zu produzieren, das ein Variationsgesetz (CR1) präsentiert, regelmäßig zunehmend als Funktion des Öffnungswinkels (A) des Schließfingers (5), während der gesamten Rotation des Schließfingers (5).

12. Verbinder nach einem der Ansprüche 1 bis 7, **dadurch gekennzeichnet, dass**:
- die frontale Oberfläche (16) des Verschiebeelements (12), die an dem Nocken (19) zur Anlage kommt, einen konkaven zylindrischen Sektor aufweist,
- der Nocken (19) einen Sektor aufweist, der relativ zur Rotationsachse (7) einen, in Rotationsrichtung des Schließfingers (5) in Richtung seiner offenen Position, leicht abnehmenden Radius präsentiert,
- derart, um ein Rückstellmoment (CR) des Schließfingers (5) in Richtung seiner geschlossenen Position zu erzeugen, das ein Variationsgesetz (CR2) präsentiert, regelmäßig abnehmend als Funktion des Öffnungswinkels (A) des Schließfingers (5), während der gesamten Rotation des Schließfingers (5).

13. Verbinder nach einem der Ansprüche 1 bis 7, **dadurch gekennzeichnet, dass**:
- die frontale Oberfläche (16) des Verschiebeelements (12), die an dem Nocken (19) zur Anlage kommt, ein konkaves Dieder mit ebenen Flächen ist und die jeweils die gleiche Neigung präsentieren, vorteilhafterweise von etwa 60°, relativ zur Schubrichtung (I-I),
- der Nocken (19) einen Sektor aufweist, der eine zylindrische Form mit einem konstanten Radius relativ zur Rotationsachse (7) präsentiert,
- derart, um ein Rückstellmoment (CR) des Schließfingers (5) in Richtung seiner geschlossenen Position zu erzeugen, das ein Variationsgesetz (CR3) präsentiert, das während der gesamten Öffnung des Schließfingers (5) im Wesentlichen konstant ist.

## Claims

1. Connector comprising:
- a connector body (1) having at least one loop-shaped body portion having an opening (2) between a first body end (3) and a second body end (4) which ends face one another,
- a closure gate (5), articulated for rotation, between a closed position and an open position, about its first gate end (6) about a pivot pin (7) situated in the connector body (1) in the vicinity of the first body end (3),
- an elastic return device (8) constantly urging the closure gate (5) toward its closed position in which the closure gate (5) connects the first (3) and second (4) body ends,
where the elastic return device (8) comprises:
- an axial compression elastic means (17) housed in a compression bore (10) formed in a longitudinal portion of one of either the first body end (3) or the first gate end (6),
- a cam (19) formed on the other of either the first body end (3) or the first gate end (6),
- a sliding element (12) with a frontal surface (16), which slides in translation along said longitudinal portion of said same first body end (3) or first gate end (6),
- the sliding element (12) being urged by the axial-compression elastic means (17) which pushes it back, in a direction of thrust (I-I), to bear slidingly against the cam (19) via its frontal surface (16) along a pressing line (20) parallel to the pivot pin (7) of the closure gate (5) and which is permanently offset toward the open position of the closure gate (5) with respect to the direction of thrust (I-I) passing through the pivot pin (7) of the closure gate (5).

2. Connector according to Claim 1, **characterized in that** the sliding element (12) is a piston mounted with the ability to slide in the compression bore (10).

3. Connector according to Claim 1, **characterized in that** the sliding element (12) is a collar mounted with the ability to slide on the exterior surface of the portion of said same first body end (3) or first gate end (6).

4. Connector according to one of Claims 1 and 2, **characterized in that** the sliding element (12) and the axial compression elastic means (17) are configured to constitute through assembly a subassembly that can be handled.

5. Connector according to Claim 4, **characterized in that**:
- the sliding element (12) comprises an axial peg (14),
- the axial compression elastic means (17) comprises a helical compression spring,
- the helical compression spring comprises a second end portion forcibly fitted around the axial peg (14).

6. Connector according to any one of Claims 1 to 5, **characterized in that** the cam (19) is positioned on the first body end (3) while the compression bore (10) is formed in a portion of the first gate end (6).

7. Connector according to any one of Claims 1 to 5, **characterized in that** the cam (19) is arranged on the first gate end (6) while the compression bore (10) is formed in a portion of the first body end (3).

8. Connector according to any one of Claims 1 to 7, **characterized in that** the frontal surface (16) of the sliding element (12) that comes to bear against the cam (19) is a planar face perpendicular to the axis of sliding of the sliding element (12).

9. Connector according to any one of Claims 1 to 7, **characterized in that** the frontal surface (16) of the sliding element (12) that comes to bear on the cam (19) is an oblique face oriented toward the inside of the loop.

10. Connector according to any one of Claims 1 to 7, **characterized in that** the frontal surface (16) of the sliding element (12) that comes to bear against the cam (19) is an oblique face oriented toward the outside of the loop.

11. Connector according to any one of Claims 1 to 7, **characterized in that**:
- the frontal surface (16) of the sliding element (12) that comes to bear against the cam (19) is a concave dihedron with planar faces each having the same inclination, advantageously of around 60°, with respect to the direction of thrust (I-I),
- the cam (19) comprises a sector which, with respect to the pivot pin (7), has a radius which increases progressively in the direction of rotation of the closure gate (5) towards its open position,
- so as to produce a return torque (CR) returning the closure gate (5) toward its closed position which exhibits a variation law (CR1) that is a regularly increasing function of the angle of opening (A) of the closure gate (5) throughout the rotation of the closure gate (5).

12. Connector according to any one of Claims 1 to 7, **characterized in that**:
- the frontal surface (16) of the sliding element (12) that comes to bear against the cam (19) has a concave cylindrical sector,
- the cam (19) comprises a sector which, with respect to the pivot pin (7), has a radius that decreases slightly in the direction of rotation of the closure gate (5) towards its open position,
- so as to produce a return torque (CR) returning the closure gate (5) to its closed position, which exhibits a variation law (CR2) that is a decreasing function of the angle of opening (A) of the closure gate (5) throughout the rotation of the closure gate (5) .

13. Connector according to any one of Claims 1 to 7, **characterized in that**:
- the frontal surface (16) of the sliding element (12) that comes to bear against the cam (19) is a concave dihedron with planar faces each having the same inclination, advantageously of around 60°, with respect to the direction of thrust (I-I),
- the cam (19) comprises a sector which has a cylindrical shape with a radius that is constant with respect to the pivot pin (7),
- so as to produce a return torque (CR) returning the closure gate (5) to its closed position that exhibits a variation law (CR3) that is substantially constant throughout the opening of the closure gate (5) .
